# EUROPÄISCHE PATENTSCHRIFT

(11) **EP 1 247 314 B1**
(45) Veröffentlichungstag und Bekanntmachung des Hinweises auf die Patenterteilung: **28.04.2004**
(21) Anmeldenummer: 00992084.4
(22) Anmeldetag: 22.12.2000
(51) Int. Cl.: H01R 12/20

(54) **MIT EINER PLATINE ABGEWINKELT MECHANISCH FIXIERBARE UND ELEKTRISCH KONTAKTIERBARE STECKEREINHEIT**
PLUG-IN CONNECTION SYSTEM THAT IS ANGLED BY MEANS OF A BOARD, CAN BE FIXED MECHANICALLY AND CAN BE CONTACTED ELECTRICALLY
ENSEMBLE CONNECTEUR ENFICHABLE POUVANT ETRE FIXE MECANIQUEMENT EN FORMANT UN ANGLE ET MIS EN CONTACT ELECTRIQUEMENT AVEC UNE PLATINE

(30) Priorität: 14.01.2000 EP 00100742
(43) Veröffentlichungstag der Anmeldung: 09.10.2002
(73) Patentinhaber: SIEMENS AKTIENGESELLSCHAFT, 80333 München (DE)
(72) Erfinder: LICKA, Petr, CZ-75701 Valasske Mezirici (CZ)
(86) Internationale Anmeldenummer: PCT/EP2000/013164
(87) Internationale Veröffentlichungsnummer: WO 2001/052359

(56) Entgegenhaltungen:
- EP-A- 0 538 495
- US-A- 5 334 049
- US-A- 5 575 663

## Beschreibung

Die Erfindung bezieht sich auf eine mit einer Platine abgewinkelt fixierbare und elektrisch kontaktierbare Steckereinheit gemäß Patentanspruch 1; derartige Steckereinheiten werden insbesondere für Stellantriebe in Kraftfahrzeugen zwischen motorinneren Stromversorgungs- und Regel- bzw. Steueranschlüssen einerseits und einer motoräußeren elektrischen Versorgungs- und Regel- bzw. Steuereinheit benötigt, die vorzugsweise in einem zum Motorgehäuse gesonderten Elektronikgehäuse untergebracht ist und mit dem Motorgehäuse durch Steckkontaktierung zu einer Baueinheit zusammenbaubar ist. Als Elektromotor, gegebenenfalls mit nachgeschaltetem Getriebe, kommen bevorzugt aus dem Kraftfahrzeug-Gleichstrombordnetz gespeiste Kommutatormotore in Anwendung.

Stellantriebe mit einem Elektromotor und einem axial angeflanschten Getriebe sowie mit einer zu dem Elektromotor vorzugsweise achsparallelen Versorgungs- und Regel- bzw. Steuereinheit sind z.B. durch die DE 42 25 496 A1 bzw. durch die EP 0 538 495 B1 bekannt.

Im Fall der EP 0 538 495 B1 ist dabei ein eine Motorsteuerund/oder Überwachungselektronik auf einer Platine aufnehmendes, zum Motorgehäuse achsparalleles, ansonsten geschlossenes Elektronikgehäuse mit einer offenen Stirnseite im Sinne einer fliegenden Lagerung an eine korrespondierende Gehäuse-Flanschöffnung des Getriebes und bzw. des Motorgehäuses mechanisch ansteckbar und dabei auch elektronisch kontaktierbar; beim gegenseitigen mechanischen Verbinden von Getriebegehäuse bzw. Motorgehäuse einerseits und Elektronikgehäuse andererseits wird die mit der Motorsteuer- und/oder Überwachungselektronik bestückte Platine über Steckkontakte mit korrespondierenden Motoranschlüssen auf einer Bürstentragplatte des Kommutatormotors selbsttätig kontaktiert.

Durch die US 5 334 049 A bzw. die DE 694 04 215 T2 ist ein elektrischer Steckverbinder mit einem Gehäuse zur Montage auf einer Oberfläche einer Schaltungsplatte bekannt, wobei eine gesonderte gestanzte und geformte Halteklammer an dem Gehäuse über einen Verankerungsschenkel montierbar sowie mit einem vorstehenden Federschenkel mit einer Rasteinrichtung durch eine Bohrung der Schaltungsplatte von der Oberseite derart steckbar ist, dass bei Erreichen seiner Betriebsstellung die Rasteinrichtung gegen die Unterseite der Schaltungsplatte vorgespannt anliegt und dadurch die Dicke unterschiedlicher Schaltungsplatten ausgleichbar ist.

Gemäß Aufgabe vorliegender Erfindung soll in für eine Serienfertigung vorteilhafter einfacher Fertigungs- und Montagetechnologie eine Baueinheit aus Platine und Steckereinheit geschaffen werden, die trotz hinzunehmender Dickentoleranzen der Platine bei sicherer gegenseitiger mechanischer Fixierung und elektrischer Kontaktierung eine hohe äußere Maßhaltigkeit aufweist.

Die Lösung dieser Aufgabe gelingt durch eine gegenseitige Fixierung und Kontaktierung zwischen der Platine und der Steckereinheit gemäß Patentanspruch 1; vorteilhafte Ausgestaltungen der Erfindung sind jeweils Gegenstand der Unteransprüche.

Durch die gegenseitige federnde Abstützung der Steckereinheit an der Oberfläche der Platine und ihre formschlüssige Anschlag-Begrenzung an der Unterseite der Platine wirkt sich einerseits ein unterschiedliches Dickenmaß der Platine nicht auf den Höhenabstand der Außenbegrenzung des Isolationskörpers der Steckereinheit aus und ist andererseits bei einfacher mechanischer Fertigung durch Steckmontagetechnik ein von einer gegenseitigen mechanischen Fixierungsbelastung freie sichere elektrische Kontaktierung der Kontaktbeine mit den entsprechenden Leiterbahnen der Leiterplatte gewährleistbar; dadurch ist sichergestellt, daß beim Anschluß der Steckereinheit an Gegenkontakte z.B. einer von der platinenseitigen Motorsteuer- und/oder Überwachungselektronik gespeisten Motor-Antriebseinheit, insbesondere einer Kommutatormotor-Getriebe-Antriebseinheit eines Kraftfahrzeug-Stellantriebes, aufgrund der gewährleisteten Maßhaltigkeit einerseits eine sichere elektrische Kontaktgabe und andererseits eine hohe Paßgenauigkeit gegenüber einem die Steckereinheit aufnehmenden Steckergehäuse sichergestellt ist.

Nach einer Ausgestaltung der Erfindung ist das zur elastischen Verspannung vorgesehene Isolationskörper-Bauteil, insbesondere nach Art einer angeformten Federzunge, gleichzeitig mit seitlichen kraftschlüssigen Abstützmitteln für den von der Platine abgewinkelt hochstehenden Isolationskörper ausgebildet.

Zur weiteren erhöhten Sicherung des Isolationskörper gegenüber seitlichen Kippkräften ist dieser mit einer formschlüssigen seitlichen Kippsicherung versehen, die nach einer Ausgestaltung der Erfindung derart gegenüber der kraftschlüssigen Seitenabstützung höhenversetzt ist, daß die externen, auf dem Isolationskörper wirkenden Kippkräfte erst dann formschlüssig abgefangen werden, wenn sie die Gegenkräfte der kraftschlüssigen Abstützung übersteigen.

Die Erfindung sowie weitere vorteilhafte Ausgestaltungen der Erfindung gemäß Merkmalen der Unteransprüche werden im folgenden anhand von schematisch dargestellten Ausführungsbeispielen in der Zeichnung näher erläutert; darin zeigen:
- FIG 1: in perspektivischer Explosionsdarstellung eine mit einer Platine elektrisch kontaktierte und mechanisch fixierte Steckereinheit vor ihrem Zusammenstecken mit einer Bürsteneinheit eines Kommutatormotors;
- FIG 2: in Seitenansicht aus FIG 1 die mit der Platine kontaktierte und fixierte Steckereinheit in ihrer gegenseitigen Montageendstellung;
- FIG 3: in Ausschnitt-Vergrößerung aus FIG 2 die gegenseitige elastische Verspannung und formschlüssigen AnschlagAnlage zwischen der Platine und dem Isolationskörper in einer Vormontagestellung mit gegenüber der Platine niedergehaltenem Isolationskörper;
- FIG 4: in Ausschnitt-Vergrößerung aus FIG 2 die gegenseitige elastische Verspannung und formschlüssigen AnschlagAnlage zwischen der Platine und dem Isolationskörper in der Montageendstellung mit durch Anschlag-Anlage gegen die Unterseite der Platine mechanisch fixiertem Isolationskörper;
- FIG 5: in perspektivischer Ansicht die Ausschnitt-Vergrößerung gemäß FIG 3,4;
- FIG 6: die in einer Seitenkipplage durch eine formschlüssige Seitenabstützung gesicherte Steckereinheit;
- FIG 7: in perspektivischer Sicht eine ohne die erfindungsgemäßen Maßhaltungs- bzw. Fixierungs- und Kontaktierungsmaßnahmen versehene Steckereinheit in Kontaktierungsstellung und Montageendstellung mit einer Bürsteneinheit eines Kommutatormotors;
- FIG 8: die Baueinheit gemäß FIG 7 in Seitenansicht.

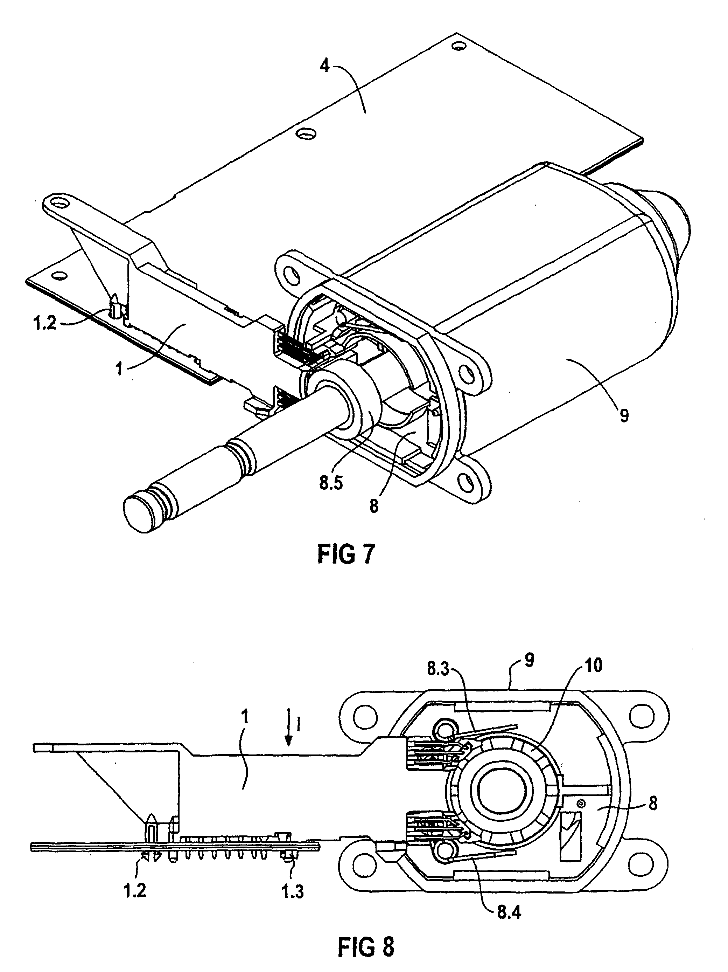

FIG 7,8 zeigen eine erfindungsgemäß zu verbessernde, mit einer Bürsteneinheit 8 an ihrer einen Anschlußseite und mit einer eine Versorgungs- und Regel- bzw. Steuereinheit aufnehmenden Platine 4 an ihrer anderen Anschlußseite kontaktierte Steckereinheit, von der hier nur der Isolationskörper 1 gezeigt ist; der Isolationskörper nimmt beide Anschlußseiten verbindende Kontaktbahnen auf, von denen hier nur platinenseitige, aus dem Isolationskörper 1 herausragende, mit der Platine 4 zu verlötende Kontaktbeine 2.3;3.3 dargestellt sind. Die Bürsteneinheit 8 ist am offenen Ende eines topfförmigen Motorgehäuses 9 eines Kommutatormotors angeordnet und nimmt schwenkbare Bürstenhalter 8.3;8.4 auf, die einen an eine hier nicht gezeigte Rotorwicklung angeschlossenen Kommutator 10 beschleifen und über die Steckereinheit bestromt sind. An die offene Stirnseite des Motorgehäuses 9 ist - wie aus dem eingangs genannten Stand der Technik bekannt - ein Getriebe anflanschbar. Die Antriebseinheit aus Kommutatormotor und Getriebe mit über die Steckereinheit angeschlossenem Versorgungs- und Regel- bzw. Steuereinheit dient z.B. als Stellantrieb für einen motorischen Fensterheber- bzw. Schiebedachantrieb in einem Kraftfahrzeug.

Zur mechanischen Fixierung zwischen dem Isolationskörper 1 und der Platine 4 dienen an den Isolationskörper 1 angeformte Rasthaken 1.2;1.3, die beim Niederdrücken des Isolationskörpers 1 in Richtung I in korrespondierende Rastaufnahmen der Platine einschnappen. In dieser Andruckhaltung des Isolationskörpers 1 gegen die Oberseite der Platine 4 können die Kontaktbeine 2.3;3.3 mit der Platine 4 verlötet werden. Je nach toleranzbedingter Dicke der das Bezugsniveau definierenden Platine 4 ergibt sich in unvorteilhafter Weise eine unterschiedliche Höhenlage der Steckereinheit und damit derer Kontakte relativ zur Platine 4 und zu einem die Platine 4 aufnehmenden und mit dem Motorgehäuse 8 zu verbindenden Steckergehäuse. Weiterhin besteht bei toleranzbedingt dünner Platine 4 die Gefahr, daß beim Niederdrücken und Verlöten der Kontaktbeine 2.3;3.3 die Rasthaken 1.2;1.3 in Abstand und somit ohne Anschlag-Ablage zu der Unterseite der Platine 4 bleiben; dies bedeutet, daß die Kontaktbeine 2.3;3.3 auch die Aufgabe einer mechanischen Fixierungshilfe mitnehmen müssen, wodurch sie in ihrer mechanischen Festigkeit überfordert sein können.

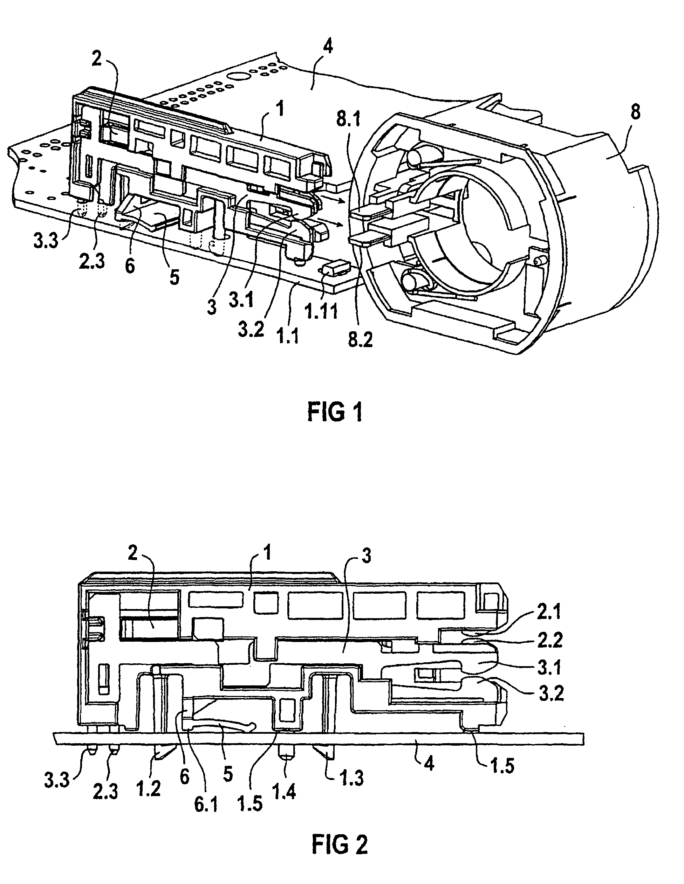

Ausgehend von dieser Erkenntnis zeichnet sich die erfindungsgemäße Lösung gemäß FIG 1-6 in vorteilhafter Weise dadurch aus, daß aufgrund der elastischen Verspannung, im Ausführungsbeispiel durch eine an den Kunststoff-Isolationskörper 1 einstückig angegossene Federzunge 5, des Ioslationskörpers 1 gegenüber der Oberseite der Platine 4 in Verbindung mit der dadurch bedingten bei jeder Dicke der Platine zwangsläufig gesicherten Anschlag-Anlage der eingeschnappten Rasthaken 1.2;1.3 an der das Bezugsniveau definierenden Unterseite der Platine 4, die Kontaktbeine 2.3;3.3 von mechanischen Fixierungsaufgaben freigehalten sind und trotz unterschiedlicher Dicke der Platine 4 ein konstantes Kontaktniveau der von dem Isolationskörper 1 aufgenommenen Kontaktbahnen 2;3 und insbesondere ihrer motorseitigen Kontaktzungen 2.1;2.2 bzw. 3.1;3.2 bei Kontaktierung mit ihnen zugeordneten Kontaktstiften 8.1 bzw.8.2 an der Bürsteneinheit 8 gewährleistet ist.

Im vorliegenden Beispiel sind lediglich zwei, vorzugsweise als Freistanzteile ausgebildete, Kontaktbahnen 2;3 als Stromversorgung zwischen der Leiterplatte 4 und den bürstenseitigen Kontaktstiften 8.1 bzw.8.2 vorgesehen; ein allgemein üblicher, z.B. einem rotorseitigen Polrad 8.5 zugeordneter statorseitiger Drehzahlsensor 1.11 in Form eines Hallwandlers ist im Ausführungsbeispiel gemäß FIG 1 auf einem, zungenartigen, in der Montageendstellung in das Motorgehäuse 9 ragenden, Vorsprung der Platine 4 angeordnet.

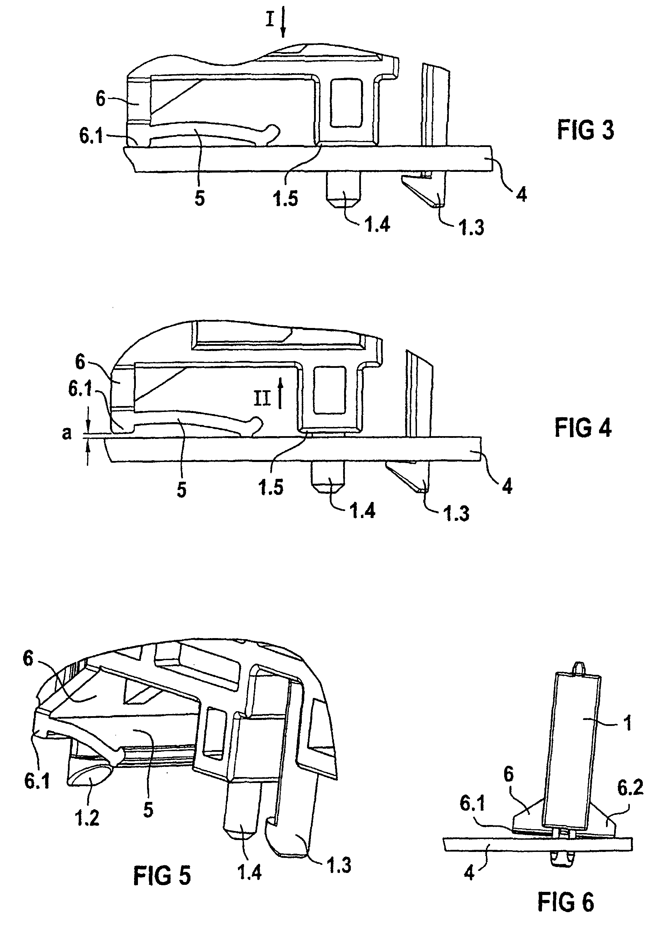

FIG 3 verdeutlicht die Lage des Isolationskörpers 1 bei seinem Andruck in Richtung I bis zur formschlüssigen Anlage auf der Oberseite der Platine 4. Als formschlüssige Anlage dienen vorteilhafte Seitenabstützungen 6.1;6.2 eines Steges 6, über den die Federzunge 5 mit dem Isolationskörper 4 verbunden ist, sowie weitere von dem Isolationskörper 1 gegen die Leiterplatte 4 vorstehende Anlageschultern 1.5. In korrespondierende Führungsöffnungen der Leiterplatte 4 greifende Führungsstifte 1.4 dienen als Montagehilfe beim Zusammenbau von Isolationskörper 1 mit darin aufgenommenen Kontaktbahnen 2;3 einerseits und Platine 4 andererseits.

Nachdem in der Niederhaltung durch Andruck der Steckereinheit 1-3 gegen die Platine 4 in Richtung I die Kontaktbeine 2.3;3.3 mit der Platine 4 verlötet sind, kann die Steckereinheit 1-3 derart freigegeben werden, daß sie durch die zuvor verspannte Federzunge 5 in Richtung II anhebbar ist, bis die Rasthaken 1.2;1.3 als einzige niveaubestimmende formschlüssige Anschlag-Anlage an der Unterseite der Platine 4 formschlüssig anliegen; wie aus der Ausschnittvergrößerung gemäß FIG 4 ersichtlich, sind die formschlüssigen Anschlag-Anlagen gemäß FIG 3 in einem freien Abstand a zur Oberfläche der Platine angeschoben.

Nach Ausgestaltungen der Erfindung sind auch in einfacher Weise fertigbare, insbesondere für eine robuste Montagehandhabung, vorteilhafte, Seitenabstützungen für die - hier in etwa 90° - zur Platine 4 zu fixierende und kontaktierende Steckereinheit 1-3 vorgesehen; dazu ist im Sinne einer kraftschlüssigen Seitenabstützung nach einer ersten Ausgestaltung die Federzunge 5 quer zur Kippachse seitlich ausladend ausgebildet. In ähnlicher Weise weist der Steg 6 formschlüssige Seitenabstützungen durch entsprechende Formung beidseitiger formschlüssiger Seitenabstützungen 6.1;6.2 - wie in FIG 6 für eine steitliche Kippabsicherung des Isolationskörpers 1 durch die rechte Anlagekante 6.2 angedeutet - auf. Zweckmäßigerweise ist der Steg 6 mit seinen Seitenabstützungen 6.1 bzw.6.2 im Sinne einer erst im Anschluß an die kraftschlüssige Seitenabstützung durch die Federzunge 5 derart höhenabstandsversetzt, daß die formschlüssige Seitenabstützung erst wirksam wird, wenn die externen Kippkräfte die kraftschlüssige Abstützkraft der Federzunge 5 übersteigen.

## Patentansprüche

1. Mit einer Platine (4) abgewinkelt mechanisch fixierbare und elektrisch kontaktierbare Steckereinheit (1-3) mit den Merkmalen:
- die Steckereinheit (1-3) besteht im wesentlichen aus einem Isolationskörper (1) und darin fixierbaren Kontaktbahnen (2;3) mit aus einer platinenseitigen Grundkante des Isolationskörpers (1) vorstehenden, in gegenseitiger Montageendstellung von Steckereinheit (1-3) und Platine (2) mit dieser kontaktierbaren Kontaktbeinen (2.3;3.3);
**dadurch gekennzeichnet, daß**
- der Isolationskörper (1) ist mit zumindest einer einstückig angeformten Federzunge (5) im Sinne einer gegenseitigen elastischen Verspannung gegenüber der Oberfläche der Platine (4) versehen;
- der Isolationskörper (1) ist mit zumindest einem einstückig angeformten, bei der gegenseitigen Montage mit korrespondierenden Rastaufnahmen der Platine (4) im Sinne einer gegenseitigen Anschlag-Anlage verrastbaren Rastmittel (1.2;1.3) versehen.

2. Steckereinheit nach Anspruch 1 mit dem Merkmal:
- die Kontaktbahnen (2;3) sind, insbesondere an ihren den Kontaktbeinen (2.3;3.3) abgewandten Enden, mit Anschluss-Steckermitteln (2.1;2.2 bzw.3.1;3.2) versehen, die beim Zusammenbau der Steckereinheit (1-3) mit einem über die Steckereinheit (1-3) mit der Platine (4) elektrisch zu verbindendes Bauteil, insbesondere eine Motor-Getriebe-Antriebseinheit, mit deren korrespondierenden Gegen-Steckermitteln (8.1 bzw.8.2) selbsttätig kontaktierbar.

3. Steckereinheit, insbesondere mit flächenförmigem, mit einer Schmalseite an der Platine fixierbarem und kontaktierbarer Isolationskörper, nach Anspruch 1 mit dem Merkmal:
- die Federzunge (5) ist im Sinne einer kraftschlüssigen Seitenabstützung der Steckereinheit (1-3) in ihrer Montageend- bzw. Betriebsstellung gegenüber der Oberseite der Platine (4) ausgebildet.

4. Steckereinheit nach zumindest einem der Ansprüche 1 bis 3 mit dem Merkmal:
- der Isolationskörper (1) ist mit zumindest einem im Sinne einer formschlüssigen Seitenabstützung der Steckereinheit (1-3) gegenüber der Oberseite der Platine (4) in ihrer gegenseitigen Montage- bzw. Betriebsstellung versehen.

5. Steckereinheit nach Anspruch 4 mit den Merkmalen:
- die Federzunge (5) ist über einen unelastischen Steg (6) an den Isolationskörper (1) angebunden;
- der Steg (6) ist im Sinne einer formschlüssigen Seitenabstützung (6.1 bzw.6.2) der Steckereinheit (1-3) gegenüber der Oberseite der Platine (4) in ihrer gegenseitigen Montageend- bzw. Betriebsstellung ausgebildet;
- der Steg (6) ist im Sinne einer erst im Anschluss an die kraftschlüssige Seitenabstützung durch die Federzunge (5) folgende formschlüssige Seitenabstützung abstandsversetzt.

6. Steckereinheit nach zumindest einem der Ansprüche 1 bis 5 mit dem Merkmal:
- der Isolationskörper (1) ist, als insbesondere flächiges hochstehendes ausgebildetes Wandteil, in seiner Montageendstellung im wesentlichen senkrecht zu der Platine (4) angeordnet.

7. Steckereinheit nach zumindest einem der Ansprüche 1 bis 6 mit dem Merkmal:
- der Isolationskörper (1) und die Mittel zur elastischen Verspannung bzw. Anschlag-Anlage bzw. Seitenabstützung gegenüber der Platine (4) sind Teile eines einstückigen, vorzugsweise mit nur in einer Achse ziehbaren Formteilen herstellbaren, Kunststoffteils.

8. Steckereinheit nach zumindest einem der Ansprüche 1 bis 7 mit dem Merkmal:
- die Steckereinheit ist zur Kontaktierung zwischen einer Steuereinheit und den Stromversorgungsanschlüssen einer Elektromotor-Antriebseinheit, insbesondere einer Motor-Getriebe-Antriebseinheit eines motorisch verstellbaren Schließteils in einem Kraftfahrzeug, vorgesehen.

## Claims

1. Plug-in connection system (1-3) that is angled by means of a board (4), can be fixed mechanically and can be contacted electrically, with the following features:
- the plug-in connection system (1-3) essentially comprises an insulating element (1) and contact paths (2;3) that can be fixed therein with contact legs (2.3;3.3) projecting from a board-side bottom edge of the insulating element (1) and arranged so that they can make contact with the plug-in connection system (1-3) and the board (2) in their mutual final assembly positions, **characterized in that**
- the insulating element (1) is provided with at least one spring-loaded tongue (5) formed in a single piece to create a mutual elastic bracing force in respect of the surface of the board (4);
- the insulating element (1) is provided with at least one latching means (1.2;1.3) formed in a single piece that can be latched with corresponding latching units on the board (4) during mutual assembly to create a mutual stop unit.

2. Plug-in connection system according to Claim 1 with the following feature:
- the contact paths (2;3) are provided, in particular at their ends facing away from the contact legs (2.3;3.3), with connection plugs (2.1;2.2 or 3.1;3.2) that can be brought into contact automatically with a component to be connected electrically to the board (4) via the plug-in connection system (1-3) during assembly of the plug-in connection system (1-3), in particular an engine transmission drive unit, with the latter's corresponding counter-plugs (8.1 or 8.2).

3. Plug-in connection system, in particular with a planar insulating element that can be connected to and brought into contact with the board on its narrow side according to Claim 1 with the following feature:
- the spring-loaded tongue (5) is configured in its final assembly or operating position in respect of the top side of the board (4) as a nonpositive side support of the plug-in connection system (1-3).

4. Plug-in connection system according to at least one of Claims 1 to 3 with the following feature:
- the insulating element (1) is provided with at least one [lacuna?] as a positive side support of the plug-in connection unit (1-3) in respect of the top side of the board (4) in their mutual assembly or operating position.

5. Plug-in connection system according to Claim 4 with the following features:
- the spring-loaded tongue (5) is connected to the insulating element (1) by means of a non-elastic cross-piece (6);
- the cross-piece (6) is configured as a positive side support (6.1 or 6.2) of the plug-in connection system (1-3) in respect of the top side of the board (4) in their mutual final assembly or operating position;
- the cross-piece (6) is offset to create a positive side support due to the spring-loaded tongue (5) only when in contact with the nonpositive side support.

6. Plug-in connection system according to at least one of Claims 1 to 5 with the following feature:
- the insulating element (1) is arranged essentially perpendicular to the board (4) in its final assembly position as a particularly planar, projecting, configured wall section.

7. Plug-in connection system according to at least one of Claims 1 to 6 with the following feature:
- the insulating element (1) and the means for elastic bracing or the stop unit or side support in respect of the board (4) are parts of a single-piece plastic component, that can preferably be manufactured with molded parts that can only be drawn in one axis.

8. Plug-in connection system according to at least one of Claims 1 to 7 with the following feature:
- the plug-in connection system is provided for contact between a control unit and the power supply terminals of an electric motor drive unit, in particular an engine transmission drive unit of a motor-controlled closing component in a vehicle.

## Revendications

1. Unité enfichable (1-3), pouvant être fixée mécaniquement et pouvant être connectée électriquement à une platine (4) en faisant un angle avec elle, comportant les caractéristiques:
- l'unité enfichable (1-3) est constituée essentiellement d'un corps d'isolation (1) et de glissières de contact (2;3) fixables dans ce dernier, avec des doigts de contact (2.3;3.3) faisant saillies d'une arête de fond, côté platine, du corps d'isolation (1), pouvant, dans la position finale de montage mutuelle de l'unité enfichable (1-3) et de la platine (2), être contactée avec cette dernière,
**caractérisée en ce que**
- le corps d'isolation (1) est muni d'au moins une languette à ressort (5) moulée contre lui en formant une seule pièce avec lui, en vue de créer une contrainte élastique mutuelle par rapport à la surface extérieure de la platine (4);
- le corps d'isolation (1) est muni d'au moins un moyen de blocage (1.2; 1.3) adapté en formant une seule pièce et pouvant, lors du montage mutuel, être bloqué avec des réceptacles de blocage correspondants de la platine (4), en vue de constituer un assemblage à accrochage et butée.

2. Unité enfichable suivant la revendication 1, comportant la caractéristique:
- les glissières de contact (2; 3) sont munies, en particulier à leurs extrémités opposées aux doigts de contact (2.3, 3.3), de moyens d'enfichage de raccordement (respectivement 2.1; 2.2 ou 3.1; 3.2), qui, lors de l'assemblage de l'unité enfichable (1-3) avec un composant à relier électriquement par l'unité enfichable (1-3) à la platine (4), en particulier une unité d'entraînement composée d'un motoréducteur, peut être automatiquement contactée avec son moyen d'enfichage complémentaire correspondant (respectivement 8.1 ou 8.2).

3. Unité enfichable, en particulier comportant un corps d'isolation surfacé, pouvant être fixé et contacté à la platine par sa face étroite, suivant la revendication 1, comportant la caractéristique:
- la languette à ressort (5) est réalisée dans le but de constituer un appui latéral par conjugaison de forces de l'unité enfichable (1-3)par rapport à la face supérieure de la platine (4), dans sa position finale de montage et respectivement dans sa position de fonctionnement.

4. Unité enfichable suivant au moins l'une des revendications 1 à 3, comportant la caractéristique:
- le corps d'isolation (1) est muni d'au moins un appui latéral pour former un appui par conjugaison de formes de l'unité enfichable (1-3), par rapport à la surface supérieure de la platine (4) dans leur position mutuelle respective de montage et de fonctionnement.

5. Unité enfichable suivant la revendication 4, comportant les caractéristiques:
- la languette à ressort (5) est reliée contre le corps d'isolation (1) par une barrette (6) non-élastique;
- la barrette (6) est réalisée pour former un appui latéral par conjugaison de formes (respectivement 6.1 et 6.2) de l'unité enfichable (1-3) par rapport à la surface supérieure de la platine (4), dans leur position mutuelle respective de fin de montage et de fonctionnement;
- la barrette (6) est décalée en distance pour former un appui latéral par conjugaison de formes seulement dans son raccordement par la languette à ressort (5), par l'appui latéral par conjugaison de forces, en suivant la languette à ressort (5).

6. Unité enfichable suivant au moins l'une des revendications 1 à 5, comportant la caractéristique:
- le corps d'isolation (1) est, comme partie de paroi réalisée en saillie vers le haut, en particulier mince, disposé, dans sa position de montage final, essentiellement perpendiculairement à la platine (4).

7. Unité enfichable suivant au moins l'une des revendications 1 à 6, comportant la caractéristique:
- le corps d'isolation (1) et les moyens pour réaliser respectivement la précontrainte élastique, ou l'assemblage à accrochage et butée, ou l'appui latéral, par rapport à la platine (4), sont des parties d'une pièce de matière plastique formant un seul bloc, pouvant, de préférence, être réalisée avec des pièces moulées étirées seulement suivant un axe.

8. Unité enfichable suivant la revendication 7, comportant la caractéristique:
- l'unité enfichable (1-3) est prévue pour la mise en contact entre une unité de commande et les raccords d'alimentation en courant d'une unité d'entraînement à moteur électrique, en particulier une unité d'entraînement comportant un motoréducteur d'une pièce de serrage, réglable par moteur, dans un véhicule automobile.
